# DEMANDE DE BREVET EUROPEEN

(11) **EP 4 717 946 A1**
(43) Date de publication de la demande: **01.04.2026**
(21) Numéro de dépôt: 25204064.7
(22) Date de dépôt: 23.09.2025
(51) Int. Cl.: F16H 25/22

(54) **SYSTÈME D' ACTIONNEMENT**

(30) Priorité: 26.09.2024 FR 2410311
(71) Demandeur: NTN Europe, 74000 Annecy (FR)
(72) Inventeur: GEORGES, Etienne, 74000 Annecy (FR)
(74) Mandataire: Sayettat, Julien Christian

(57) **Abrégé**

L'invention concerne un système d'actionnement comprenant un écrou (1) et une vis (2) dont les périphéries extérieure (4) et intérieure (5) respectives sont pourvues de filets (4a, 5a) formant un chemin de circulation (7) de corps roulants (6), l'un parmi la vis (2) et l'écrou (1) présentant un chemin (8) de recirculation des corps roulants (6) pour alimenter le chemin (7), le chemin (7) comprend une portion centrale (7c) disposée entre deux portions latérales (7a, 7b), le chemin de recirculation (8) présentant deux tronçons latéraux (8a, 8b) s'étendant respectivement entre une portion latérale (7a, 7b) et ladite portion centrale, en étant agencés pour permettre la recirculation des corps roulants (6) séparément depuis la portion centrale (7c) vers l'une des portions latérales (7a) pour l'un des tronçons (8a) et depuis l'autre portion latérale (7b) vers ladite portion centrale pour l'autre tronçon (8b).

## Description

L'invention concerne un système d'actionnement d'un module mécanique par déplacement linéaire d'un organe d'actionnement.

Elle s'applique notamment à l'actionnement d'un module mécanique nécessitant un faible déplacement de l'organe mais sous une forte charge, tel que par exemple un étrier de frein d'un véhicule automobile.

On connaît des systèmes d'actionnement qui comprennent un écrou monté en rotation dans un carter, ainsi qu'une vis formant organe d'actionnement qui est montée dans ledit écrou.

Le système d'actionnement est de type « vis à billes » en présentant, à l'interface entre l'écrou et la vis, un chemin de circulation d'une pluralité de corps roulants, ledit chemin étant agencé pour pouvoir actionner, par rotation de l'écrou, la translation axiale de la vis.

En particulier, on connaît des systèmes dans lesquels chacune des périphéries intérieure et extérieure de respectivement l'écrou et la vis est pourvue d'un filet hélicoïdal, lesdits filets étant disposés en regard radial pour former un chemin de circulation hélicoïdal des corps roulants entre deux portions latérales dudit chemin.

De façon connue, l'un parmi la vis et l'écrou présente un chemin de recirculation des corps roulants pour alimenter le chemin de circulation, au fur et à mesure des déplacements relatifs de la vis dans l'écrou.

Selon une réalisation, dite à recirculation externe, le chemin de recirculation s'étend continument entre les portions latérales du chemin de circulation, de sorte à pouvoir former une interface de dimension axiale importante afin d'augmenter la capacité de charge du système.

Toutefois, cette réalisation nécessite un nombre de corps roulants important qui circulent alors dans le chemin sous la forme d'un train dont la longueur peut provoquer des casses entraînant une dégradation rapide dudit chemin.

L'invention a pour but de perfectionner l'art antérieur en proposant notamment un système d'actionnement qui est agencé pour pouvoir concilier la capacité de charge avec la durée de vie.

A cet effet, l'invention propose un système d'actionnement comprenant un écrou et une vis montée dans ledit écrou en formant une interface entre leur périphérie respectivement extérieure et intérieure, ladite interface étant équipée de corps roulants qui sont disposés pour qu'une rotation de l'écrou actionne une translation de la vis, chacune des périphéries extérieure et intérieure de respectivement la vis et l'écrou étant pourvue d'un filet hélicoïdal, lesdits filets étant disposés en regard pour former un chemin de circulation hélicoïdal des corps roulants entre deux portions latérales dudit chemin, l'un parmi la vis et l'écrou présentant un chemin de recirculation des corps roulants pour alimenter le chemin de circulation, le chemin de circulation comprenant une portion centrale disposée entre les portions latérales, le chemin de recirculation présentant deux tronçons latéraux s'étendant respectivement entre l'une des portions latérales et ladite portion centrale, lesdits tronçons latéraux étant agencés pour permettre la recirculation des corps roulants séparément depuis la portion centrale vers l'une des portions latérales pour l'un des tronçons et depuis l'autre portion latérale vers ladite portion centrale pour l'autre tronçon.

D'autres objets et avantages de l'invention apparaîtront dans la description qui suit, faite en référence aux figures annexées, dans lesquelles :
[Fig.1] représente en perspective un système d'actionnement selon un premier mode de réalisation de l'invention, dans lequel l'écrou est partiellement coupé pour montrer la circulation des corps roulants ;
[Fig.2] représente en perspective la vis du système d'actionnement de la figure 1, dans laquelle le chemin de recirculation des corps roulants est représenté en transparence au moyen de lignes en pointillés ;
[Fig.3a] et
   [Fig.3b] représentent chacune, en vue de dessus, la vis de la figure 2 suivant une orientation angulaire différente (à droite), accompagnée d'une vue en coupe suivant un plan axial différent (à gauche), respectivement le plan A-A (pour la figure 3a) et le plan B-B (pour la figure 3b) ;
[Fig.4a],

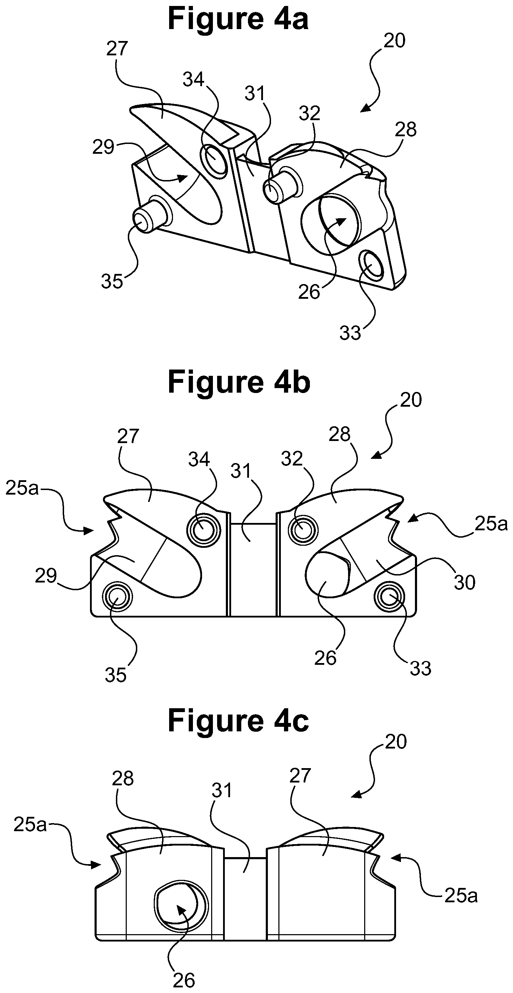

   [Fig.4b] et
   [Fig.4c] représentent chacune, en perspective suivant différentes orientations, un organe latéral de recirculation de corps roulants équipant le système des figures précédentes, et ce avant assemblage dudit organe latéral ;
[Fig.5a],

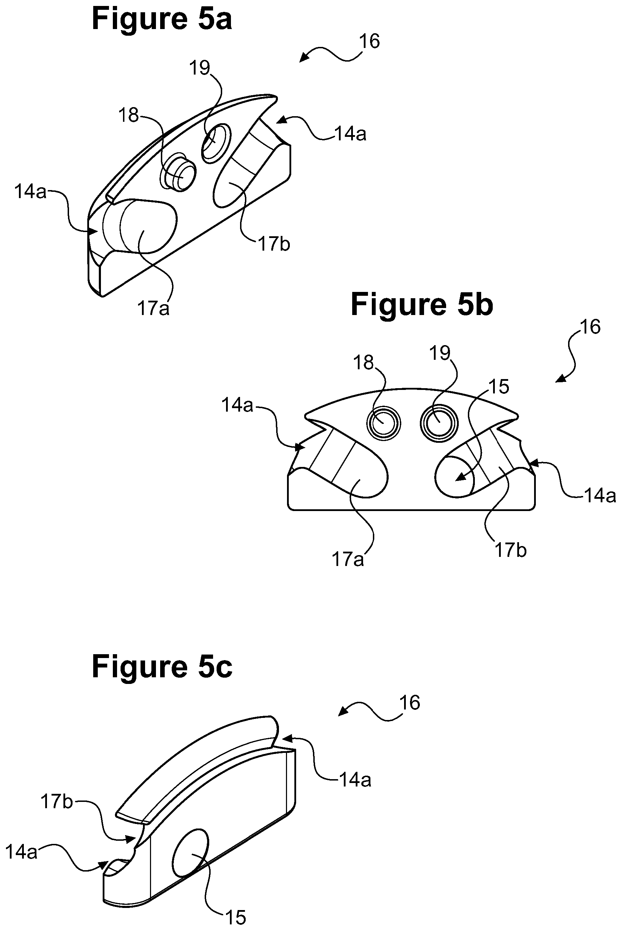

   [Fig.5b] et
   [Fig.5c] représentent chacune une coque destinée à former l'organe central équipant le système des figures précédentes, ladite coque étant représentée en perspective vue de l'intérieur du chemin de recirculation (figure 5a), en vue de face depuis l'intérieur du chemin de recirculation (figure 5b) et en perspective vue de l'extérieur dudit chemin de recirculation (figure 5c) ;

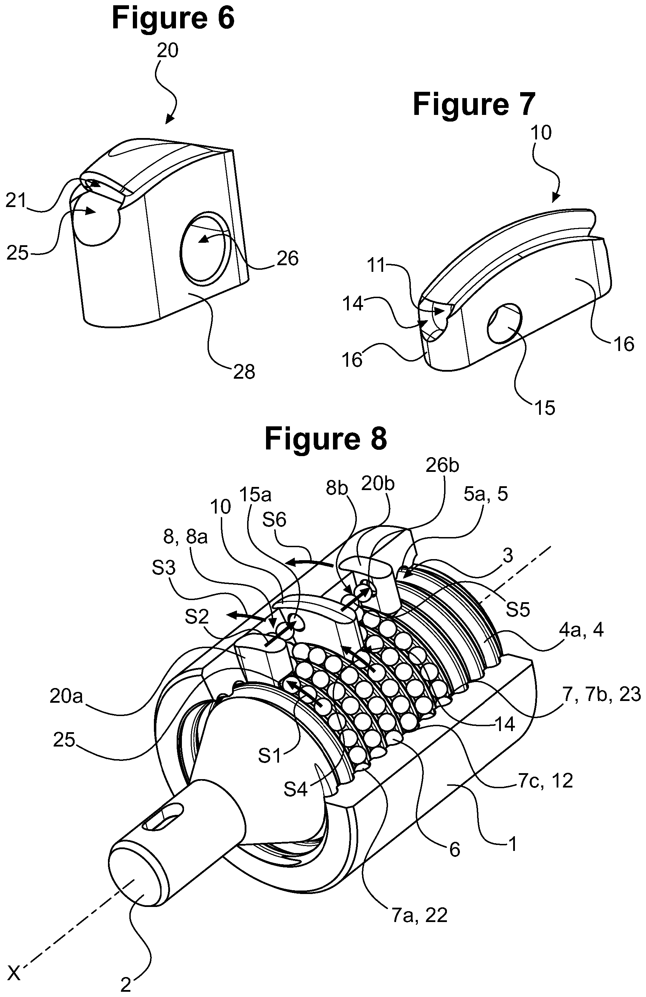

[Fig.6] et
   [Fig.7] représentent chacune en perspective un organe respectivement latéral et central équipant le système des figures précédentes ;
[Fig.8] représente en perspective un système d'actionnement selon un deuxième mode de réalisation de l'invention, dans lequel l'écrou est partiellement coupé pour montrer la circulation des corps roulants.

En relation avec ces figures, on décrit ci-dessous un système d'actionnement d'un module mécanique par déplacement linéaire d'un organe d'actionnement, notamment un module nécessitant un faible déplacement de l'organe mais sous une forte charge, tel que par exemple un étrier de frein d'un véhicule automobile.

Le système d'actionnement comprend un écrou 1 monté en rotation dans un carter (non représenté), ainsi qu'une vis 2 d'actionnement dudit dispositif qui est montée dans ledit écrou, en formant une interface radiale 3 entre la périphérie extérieure 4 de ladite vis et la périphérie intérieure 5 dudit écrou.

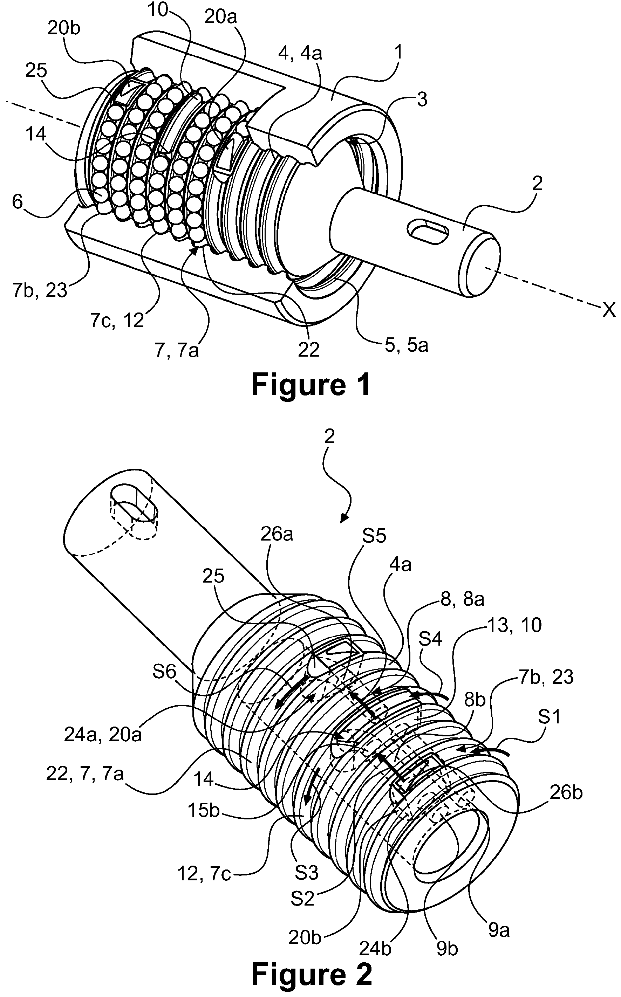

Dans la description, les termes de positionnement dans l'espace sont pris en référence au système d'actionnement tel que représenté sur les figures. Ainsi :
- les termes « extérieur » et « intérieur » sont définis par rapport à l'axe X de rotation de l'écrou 1 et de déplacement de la vis 2, respectivement pour une localisation éloignée et proche dudit axe ;
- les termes « axial » et « radial » sont également définis par rapport à cet axe X, et font référence à une direction respectivement suivant cet axe X et s'éloignant ou se rapprochant de lui ;
- les termes « avant » et « arrière » sont définis par rapport au sens d'actionnement, pour une localisation respectivement à droite et à gauche sur la figure 1, et respectivement à gauche et à droite sur la figure 8.

L'interface 3 est équipée de corps roulants 6, par exemple sous forme de billes sphériques, qui sont disposés pour qu'une rotation de l'écrou 1 autour de l'axe X actionne une translation de la vis 2 suivant ce même axe X, entre une position déployée vers l'avant - respectivement rétractée vers l'arrière - pour actionner - respectivement se désengager - du module à actionner.

En relation avec les figures, chacune des périphéries extérieure 4 et intérieure 5 de respectivement la vis 2 et l'écrou 1 est pourvue d'un filet hélicoïdal 4a, 5a, lesdits filets étant disposés en regard radial pour former un chemin 7 de circulation hélicoïdal des corps roulants 6 entre deux portions latérales respectivement avant 7a et arrière 7b dudit chemin.

L'un parmi la vis 2 et l'écrou 1 présente un chemin 8 de recirculation des corps roulants 6 pour alimenter le chemin de circulation 7, afin d'empêcher la sortie desdits corps roulants dudit chemin de circulation lors des déplacements relatifs de la vis 2 dans l'écrou 1.

Les figures 1, 2, 3a et 3b représentent un premier mode de réalisation, dans lequel le chemin 8 de recirculation des corps roulants 6 est formé dans la vis 2. La figure 8 représente un deuxième mode de réalisation, dans lequel le chemin de recirculation 8 est formé dans l'écrou 1.

Le chemin de circulation 7 comprend une portion centrale 7c disposée entre ses portions latérales 7a, 7b, le chemin de recirculation 8 présentant deux tronçons latéraux, respectivement avant 8a et arrière 8b, qui s'étendent entre l'une des portions latérales - respectivement la portion avant 7a et la portion arrière 7b - et la portion centrale 7c, en étant agencés pour permettre la recirculation des corps roulants 6 séparément depuis la portion centrale 7c vers l'une des portions latérales 7a, 7b pour l'un des tronçons 8a, 8b et depuis l'autre desdites portions latérales vers ladite portion centrale pour l'autre tronçon 8b, 8a.

Ainsi, la portion centrale 7c assure une double fonction de renvoi, en guidant sélectivement les corps roulants 6 vers l'avant ou l'arrière du chemin 7, suivant le sens de rotation de l'écrou 1 et donc de déplacement de la vis 2. Cet agencement permet de limiter la longueur du train de corps roulants 6 circulant dans le chemin 7, permettant ainsi de limiter les risques de casse et/ou d'usure prématurée du système, tout en ayant une interface 3 de longueur axiale suffisante pour qu'il puisse accepter une charge importante.

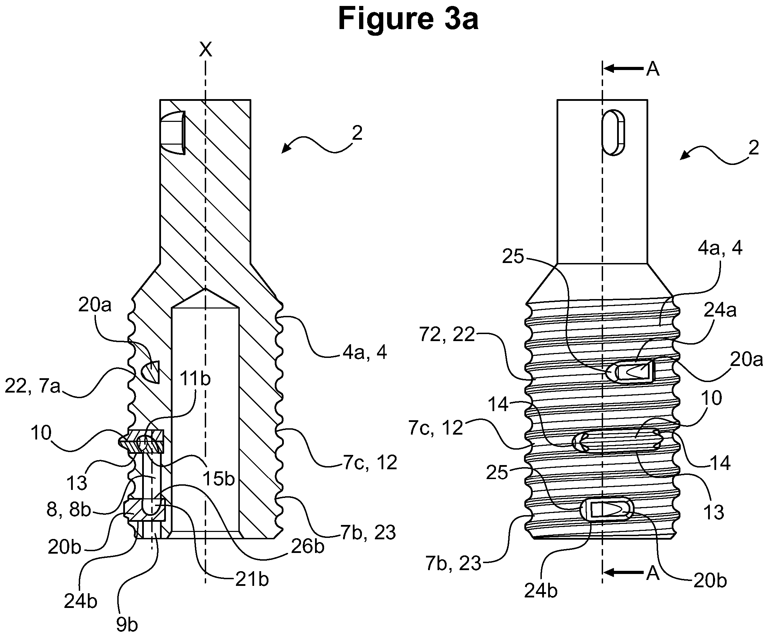

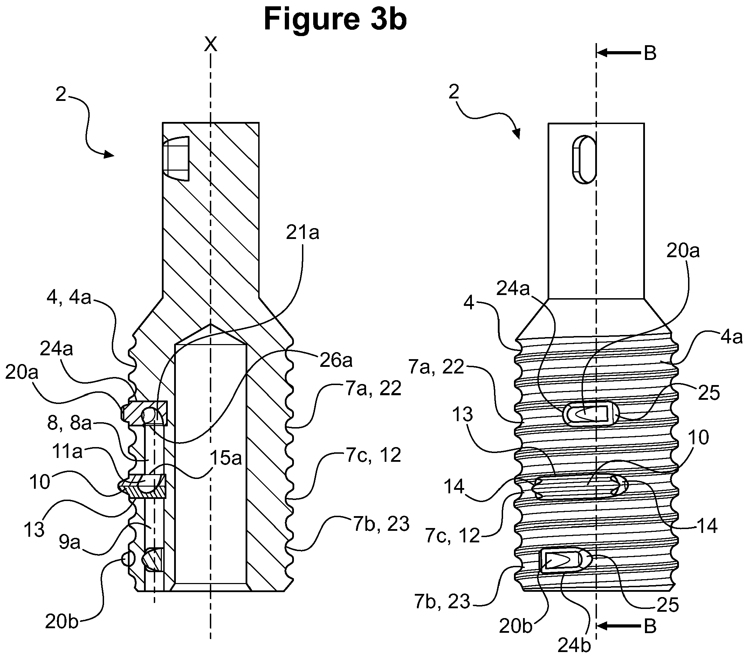

En relation avec les figures 2, 3a et 3b, chaque tronçon de recirculation 8a, 8b est formé d'un tunnel 9a, 9b qui est percé dans la vis 2, comme représenté, ou en variante dans l'écrou 1 (non visible sur la figure 8), lesdits tunnels s'étendant chacun suivant une direction sensiblement parallèle à l'axe X de rotation de l'écrou 1 (et de translation de la vis 2), en étant décalés angulairement l'un par rapport à l'autre. De façon avantageuse, le décalage angulaire entre les tunnels 9a, 9b est compris entre 10° et 50°, notamment de l'ordre de 30°.

Dans les modes de réalisation représentés, la portion centrale 7c est équipée d'un organe central 10 qui présente un premier conduit 11, 11a de guidage des corps roulants 6 entre le chemin de circulation 7 et le tronçon avant 8a de recirculation, ainsi qu'un deuxième conduit 11, 11b distinct pour le guidage desdits corps roulants entre ledit chemin de circulation et le tronçon arrière 8b de recirculation.

En relation avec les figures 2, 3a et 3b, la portion centrale 7c présente un filet 12 qui est équipé d'une cavité 13, de géométrie sensiblement oblongue, formée à cet effet dans la vis 2 (comme représenté) ou dans l'écrou 1 (non représenté sur la figure 8), et dans laquelle débouchent les tronçons de recirculation 8a, 8b, l'organe central 10 étant disposé dans ladite cavité avec les conduits 11a, 11b débouchant dans le filet central 12 d'un côté et de l'autre dudit organe.

En particulier, le filet central 12 est formé d'une partie centrale du filet hélicoïdal 4a de la vis 2, et chaque conduit 11a, 11b présente une ouverture tangentielle 14 qui débouche dans ledit filet central, ainsi qu'une ouverture latérale 15 - respectivement avant 15a et arrière 15b - débouchant dans le tronçon avant 8a ou arrière 8b correspondant.

De façon similaire, chaque portion latérale 7a, 7b est équipée d'un organe latéral 20 - respectivement avant 20a et arrière 20b - qui présente un conduit 21, 21a, 21b de guidage des corps roulants 6 entre le chemin de circulation 7 et le tronçon respectivement avant 8a et arrière 8b de recirculation.

Dans les modes de réalisation représentés, chaque portion latérale 7a, 7b présente un filet latéral 22, 23 qui est équipé d'une cavité 24a, 24b, de géométrie sensiblement oblongue, et dans laquelle débouche le tronçon de recirculation respectivement avant 8a et arrière 8b, l'organe latéral 20a, 20b correspondant étant disposé dans ladite cavité avec le conduit 21a, 21b débouchant dans ledit tronçon correspondant, et d'un côté dudit organe.

En particulier, et de manière similaire à la portion centrale 7c, chaque filet latéral 22, 23 est formé d'une partie latérale respectivement avant et arrière du filet hélicoïdal 4a de la vis 2, et chaque conduit latéral 21a, 21b présente une ouverture tangentielle 25 qui débouche dans ledit filet latéral, ainsi qu'une ouverture latérale 26 - respectivement avant 26a et arrière 26b - débouchant dans le tronçon avant 8a ou arrière 8b correspondant.

Comme représenté notamment sur les figures 2, 3a et 3b, le tunnel 9a de formation du tronçon avant 8a débouche axialement dans chacune des cavités 24a, 13 de réception des organes respectivement central 10 et avant 20a, lesdits organes étant disposés dans leur cavité 24a, 13 respective de manière à :
- mettre en communication axiale une partie avant dudit tunnel, qui forme ledit tronçon avant 8a, avec le conduit latéral avant 21a et le premier conduit central 11a ;
- fermer les extrémités axiales de la partie arrière dudit tunnel.

De même, le tunnel 9b de formation du tronçon arrière 8b débouche axialement dans les cavités de réception des organes central 10 et arrière 20b, ces derniers étant disposés dans leur cavité 13, 24b respective de manière à :
- mettre en communication axiale une partie avant dudit tunnel, qui forme ledit tronçon arrière, avec le deuxième conduit central 11b et le conduit latéral arrière 21b ;
- fermer axialement la communication entre ledit tronçon arrière et l'extrémité arrière dudit tunnel.

En relation avec la figure 2, un sens de circulation / recirculation des billes 6 est représenté pour une translation de la vis 2 vers l'arrière. En particulier, les corps roulants 6 se déplacent :
- depuis la portion arrière 7b du chemin 7 : en passant par l'ouverture tangentielle 25 de l'organe arrière 20b (flèche S1), puis en débouchant dans le tronçon de recirculation arrière 8b via l'ouverture latérale 26b dudit organe, afin d'être acheminés dans le conduit de guidage 11b de l'organe central 10 (flèche S2), avant de sortir dudit organe central par l'ouverture tangentielle 14 dudit conduit de guidage central pour être remis en circulation sur la portion centrale 7c du chemin 7 (flèche S3) en direction de l'organe arrière 20b ;
- depuis la portion centrale 7c du chemin 7 : en passant par le conduit de guidage 11a opposé de l'organe central 10, dans lequel ils pénètrent via l'ouverture tangentielle 14 correspondante (flèche S4), puis en débouchant dans le tronçon de recirculation avant 8a, via l'ouverture latérale 15a dudit conduit de guidage, afin d'être acheminés vers l'organe latéral avant 20a (flèche S5), avant de sortir du canal 21a dudit organe avant, via son ouverture tangentielle 25 pour être remis en circulation sur la portion avant 7a du chemin 7 (flèche S6) en direction de l'organe central 10.

Suivant un sens de rotation inverse de l'écrou 1 et donc de translation vers l'avant de la vis 2, et comme représenté sur la figure 8, les corps roulants 6 se déplacent :
- depuis la portion avant 7a du chemin 7 : en passant par l'ouverture tangentielle 25 de l'organe avant 20a (flèche S1), puis en débouchant latéralement dans le tronçon de recirculation avant 8a, afin d'être acheminés dans le conduit de guidage 11a de l'organe central 10 (flèche S2), avant de sortir dudit organe central par l'ouverture tangentielle 14 dudit conduit de guidage central pour être remis en circulation sur la portion centrale 7c du chemin 7 (flèche S3) en direction de l'organe avant 20a ;
- depuis la portion centrale 7c du chemin 7 : en passant par le conduit de guidage 11b opposé de l'organe central 10, dans lequel ils pénètrent via l'ouverture tangentielle 14 correspondante (flèche S4), puis en débouchant latéralement dans le tronçon de recirculation arrière 8b, afin d'être acheminés vers l'organe latéral arrière 20b (flèche S5), avant de sortir du canal 21b dudit organe arrière, via son ouverture tangentielle 25, pour être remis en circulation sur la portion arrière 7b du chemin 7 (flèche S6) en direction de l'organe central 10.

Dans les modes de réalisation représentés, l'organe central 10 présente un corps dans lequel les deux conduits de guidage 11a, 11b sont formés de part et d'autre.

En relation avec les figures 5a, 5b, 5c et 7, le corps de l'organe central 10 est formé par assemblage de deux coques 16, chacune desdites coques présentant une empreinte 17a, 17b d'une partie de chacun des conduits 11a, 11b.

De façon avantageuse, les coques 16 présentent un agencement identique, notamment en étant obtenues par moulage d'un matériau polymère, ce qui permet d'en faciliter la fabrication, notamment au moyen d'un unique moule, et donc de réduire les coûts de production du système d'actionnement.

En particulier, chaque empreinte 17a, 17b présente une partie 14a d'une ouverture tangentielle 14 du conduit 11a, 11b correspondant, et l'une des empreintes 17b est traversée par une ouverture latérale 15 du conduit 11a, 11b correspondant.

Par ailleurs, chaque coque 16 intègre des moyens d'association réciproque à l'autre coque 16, lesdits moyens comprenant un picot 18 et un orifice borgne 19 complémentaire destinés à coopérer par emmanchement avec respectivement l'orifice 19 et le picot 18 de l'autre coque 16.

De façon similaire, et comme représenté sur les figures 4a, 4b, 4c et 6, chaque organe latéral 20a, 20b est formé par l'assemblage de deux coques 27, 28, chacune desdites coques présentant une empreinte 29, 30 d'une partie du conduit 21a, 21b.

De façon avantageuse, les deux coques 27, 28 sont liées en une pièce par un pont de matière 31, ladite pièce étant obtenue par moulage d'un matériau polymère, ledit pont de matière pouvant être plié pour permettre l'assemblage desdites coques. En outre, chaque organe latéral 20a, 20b peut être produit à partir de telles pièces identiques.

Comme indiqué précédemment en relation avec l'organe central 10, cet agencement permet de faciliter la fabrication des organes latéraux 20a, 20b, notamment à partir d'un unique moule permettant un démoulage axial.

Comme représenté sur les figures 4a à 4c, chaque empreinte 29, 30 présente une partie 25a de l'ouverture tangentielle 25 du conduit latéral 21a, 21b correspondant, et l'une des empreintes 30 est traversée par l'ouverture latérale 26 dudit conduit.

Par ailleurs, chaque coque 27, 28 intègre des moyens d'association réciproque à l'autre coque 28, 27. Pour ce faire, l'une des coques 27 présente un picot supérieur 32 et un orifice borgne inférieur 33 destinés à coopérer par emmanchement avec respectivement un orifice borgne supérieur 34 et un picot inférieur 35 de géométries complémentaires formés sur l'autre coque 28 lors de l'assemblage de l'organe 20, 20a, 20b par pliage du pont 31 reliant lesdites coques.

## Revendications

1. Système d'actionnement comprenant un écrou (1) et une vis (2) montée dans ledit écrou en formant une interface (3) entre leur périphérie respectivement extérieure (4) et intérieure (5), ladite interface étant équipée de corps roulants (6) qui sont disposés pour qu'une rotation de l'écrou (1) actionne une translation de la vis (2), chacune des périphéries extérieure (4) et intérieure (5) de respectivement la vis (2) et l'écrou (1) étant pourvue d'un filet hélicoïdal (4a, 5a), lesdits filets étant disposés en regard pour former un chemin de circulation (7) hélicoïdal des corps roulants (6) entre deux portions latérales (7a, 7b) dudit chemin, l'un parmi la vis (2) et l'écrou (1) présentant un chemin (8) de recirculation des corps roulants (6) pour alimenter le chemin de circulation (7), ledit système d'actionnement étant **caractérisé en ce que** le chemin de circulation (7) comprend une portion centrale (7c) disposée entre les portions latérales (7a, 7b), le chemin de recirculation (8) présentant deux tronçons latéraux (8a, 8b) s'étendant respectivement entre l'une des portions latérales (7a, 7b) et ladite portion centrale, lesdits tronçons latéraux étant agencés pour permettre la recirculation des corps roulants (6) séparément depuis la portion centrale (7c) vers l'une des portions latérales (7a) pour l'un des tronçons (8a) et depuis l'autre portion latérale (7b) vers ladite portion centrale pour l'autre tronçon (8b).

2. Système d'actionnement selon la revendication 1, **caractérisé en ce que** la portion centrale (7c) est équipée d'un organe central (10) présentant un premier conduit (11a) de guidage des corps roulants (6) entre le chemin de circulation (7) et le premier tronçon (8a) de recirculation, et un deuxième conduit (11b) de guidage des corps roulants (6) entre le chemin de circulation (7) et le deuxième tronçon (8b) de recirculation.

3. Système d'actionnement selon la revendication 2, **caractérisé en ce que** l'organe central (10) présente un corps dans lequel les deux conduits de guidage (11a, 11b) sont formés de part et d'autre.

4. Système d'actionnement selon l'une des revendications 2 ou 3, **caractérisé en ce que** la portion centrale (7c) présente un filet (12) équipé d'une cavité (13) dans laquelle débouchent les tronçons de recirculation (8a, 8b), l'organe central (10) étant disposé dans ladite cavité avec les conduits (11a, 11b) débouchant dans ledit filet d'un côté et de l'autre dudit organe.

5. Système d'actionnement selon l'une quelconque des revendications 2 à 4, **caractérisé en ce que** chacun des conduits (11a, 11b) présente une ouverture tangentielle (14) débouchant dans le chemin de circulation (7) et une ouverture latérale (15, 15a, 15b) débouchant dans un tronçon de recirculation (8a, 8b).

6. Système d'actionnement selon l'une quelconque des revendications 2 à 5, **caractérisé en ce que** l'organe central (10) est formé par l'assemblage de deux coques (16), chacune desdites coques présentant une empreinte (17a, 17b) d'une partie de chacun des conduits (11a, 11b).

7. Système d'actionnement selon la revendication 6, **caractérisé en ce que** les deux coques (16) sont identiques, notamment en étant obtenues par moulage d'un matériau polymère.

8. Système d'actionnement selon l'une quelconque des revendications 1 à 7, **caractérisé en ce que** chacun des tronçons de recirculation (8a, 8b) est formé d'un tunnel (9a, 9b) percé dans la vis (2) ou dans l'écrou (1), lesdits tunnels étant décalés angulairement.

9. Système d'actionnement selon l'une quelconque des revendications 1 à 8, **caractérisé en ce que** chacune des portions latérales (7a, 7b) est équipée d'un organe latéral (20, 20a, 20b) présentant un conduit (21, 21a, 21b) de guidage des corps roulants (6) entre le chemin de circulation (7) et l'un des tronçons de recirculation (8a, 8b).

10. Système d'actionnement selon la revendication 9, **caractérisé en ce que** chacune des portions latérales (7a, 7b) présente un filet (22, 23) équipé d'une cavité (24a, 24b) dans laquelle débouche un tronçon de recirculation (8a, 8b), l'organe latéral (20a, 20b) correspondant étant disposé dans ladite cavité avec le conduit (21a, 21b) débouchant dans ledit tronçon d'un côté dudit organe.

11. Système d'actionnement selon l'une des revendications 9 ou 10, **caractérisé en ce que** chacun des conduits latéraux (21a, 21b) présente une ouverture tangentielle (25) débouchant dans le chemin de circulation (7) et une ouverture latérale (26, 26a, 26b) débouchant dans un tronçon de recirculation (8a, 8b).

12. Système d'actionnement selon l'une quelconque des revendications 9 à 11, **caractérisé en ce que** chacun des organes latéraux (20, 20a, 20b) est formé par l'assemblage de deux coques (27, 28), chacune desdites coques présentant une empreinte (29, 30) d'une partie du conduit (21, 21a, 21b).

13. Système d'actionnement selon la revendication 12, **caractérisé en ce que** les deux coques (27, 28) sont liées en une pièce par un pont de matière (31), notamment en étant obtenue par moulage d'un matériau polymère, ledit pont de matière pouvant être plié pour permettre l'assemblage desdites coques.
